# EUROPEAN PATENT SPECIFICATION

(11) **EP 1 614 511 B1**
(45) Date of publication and mention of the grant of the patent: **31.12.2008**
(21) Application number: 05014124.1
(22) Date of filing: 30.06.2005
(51) Int. Cl.: B27B 5/16, B27G 19/04

(54) **Blade guard assembly for a saw**
Schutzabdeckung für eine Säge
Garde pour la lame d'une scie

(30) Priority: 07.07.2004 US 586039 P
(43) Date of publication of application: 11.01.2006
(60) Divisional application: 07111827.7
(73) Proprietor: Black & Decker Inc., Newark, Delaware 19711 (US)
(72) Inventor: Lambert, Torrey R., Baltimore Maryland 21224 (US); Miller, Mark D. Jr, Airville Pennsylvania 17302 (US); Gehret, Robert S., Hampstead Maryland 21074 (US)
(74) Representative: Bell, Ian Stephen

(56) References cited:
- EP-A- 0 450 400
- EP-A- 0 586 172
- US-A- 5 950 514
- US-A1- 2002 134 211

## Description

This invention relates generally to a blade guard assembly for saws and more specifically to a blade guard assembly for a combination table/miter saw.

It is well known in the miter saw field to provide a blade guard assembly to cover a blade when the saw assembly is in an upper position. Typically such blade guard assembly is moved when the saw assembly is moved downwardly towards a workpiece. Such blade guard assembly is not typically used on table saws or combination table/miter saws. It is an object of the invention to provide an enhanced blade guard assembly for combination table/miter saws, and miter saws.

US 5,950,514 describes a power tool according to the preamble of claim 1.

According to the present invention, there is provided a power tool comprising the features of claim 1.

In accordance with the present invention, an improved support assembly is employed. The power tool has a base assembly, a table supported by the base assembly, a saw assembly pivotally attached to the table via a trunnion, the saw assembly including a motor, a blade driven by the motor, an upper blade guard covering an upper part of the blade, a lower blade guard pivotally attached to the upper blade guard for covering a lower part of the blade, an auxiliary blade guard pivotally attached to the lower blade guard, a link attached at one end to the trunnion and at the other end to the lower blade guard, an auxiliary link attached at one end to the link and at the other end to the auxiliary blade guard, and an uplock assembly comprising a guard lock movable between a first position contacting the lower blade guard and a second position not contacting the lower blade guard.

Additional features and benefits of the present invention are described, and will be apparent from, the accompanying drawings and the detailed description below. The accompanying drawings illustrate preferred embodiments of the invention according to the practical application of the principles thereof, and in which:
FIG. 1 illustrates a combination table/miter saw according to the invention, whereas FIGS. 1A-1B are side views of the combination table/miter saw in the miter saw and table saw modes, respectively;
FIG. 2 illustrates the saw assembly with a blade guard assembly according to the invention, where FIGS. 2A-2B are left and right side views of such blade guard assembly, respectively; and
FIG. 3 is a perspective view of a dust collector according to the invention.

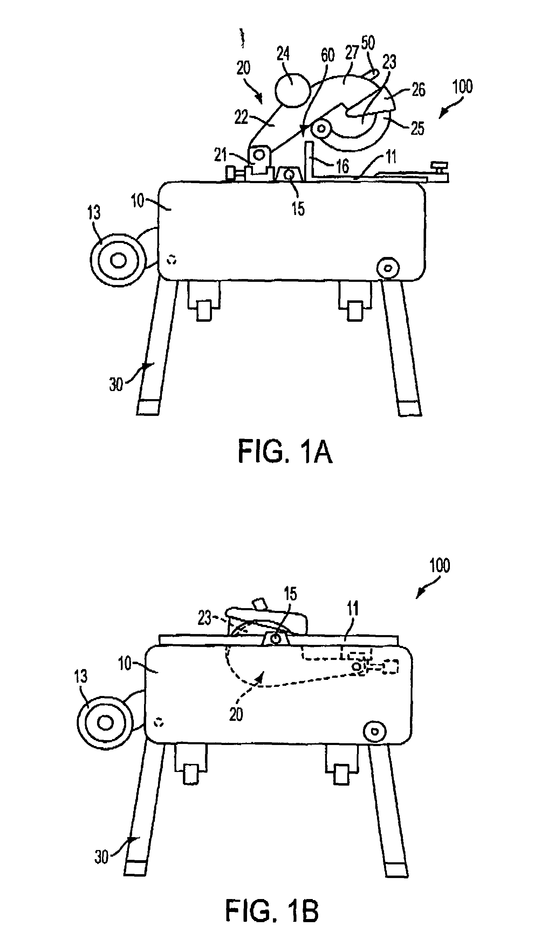

The invention is now described with reference to the accompanying figures, wherein like numerals designate like parts. Referring to FIG. 1, a combination table/miter saw 100 may include a base assembly 10, a table 11 supported by base assembly 10, and a saw assembly 20 supported by the table 11. Saw assembly 20 may include a trunnion 21 disposed on the table 11, a pivotable arm 22 pivotably attached to trunnion 21, a motor 24 supported by the arm 22 and driving a blade 23. Arm 22 also supports upper blade guard 27, which covers an upper part of blade 23. Lower blade guard 25 is pivotally attached to upper blade guard 27. An auxiliary blade guard 26 may be pivotably connected to lower blade guard 25.

Preferably, table 11 is pivotally attached to base assembly 10 via joint 15 so that, when the table 11 is in the orientation of FIG. 1A, the saw assembly 20 can act as a miter saw, i.e., saw assembly 20 can be pivoted downwardly towards table 11 to cut a workpiece placed on table 11. The user can use a handle 50 disposed on saw assembly 20 (e.g., on arm 22 and/or upper blade guard 27) to pivot saw assembly 20 downwardly towards table 11.

On the other hand, when table 11 is rotated via joint 15 to the orientation of FIG. 1B, the saw 100 acts as a table saw, i.e., saw assembly 20 will be supported by and disposed underneath the table 11. In such orientation, blade 23 extends through the table 11, so that a user can dispose a workpiece on table 11 and push it towards blade 23 for cutting.

Persons skilled in the art will recognize that the invention described below can be applicable to non-combined miter saws.

Preferably, base assembly 10 has at least one wheel 13 thereon.

Base assembly 10 may also support four leg assemblies 30. Preferably leg assemblies 30 are pivotally attached to base assembly 10.

Referring to FIGS. 1-2, lower blade guard 25 is pivotally connected to upper blade guard 27 at pivot junction 25P. Auxiliary blade guard 26 is pivotally connected to lower blade guard 25 at pivot junction 26P.

A link 28 is pivotally connected at one end to trunnion 21 and to lower blade guard 25 at the other end. Preferably link 28 is made of metal. It is preferable that link 28 be pivotally connected to lower blade guard 25 at a pivot junction 28P. Pivot junction 25P is preferably disposed between the point in trunnion 21 connected to link 28 and pivot junction 28P. Furthermore, pivot junction 25P is preferably disposed underneath a line drawn between the point in trunnion 21 connected to link 28 and pivot junction 28P.

With such arrangement, when the saw assembly 20 is moved downwardly towards table 11, link 28 will pull lower blade guard 25, exposing blade 23 for the cutting operation.

An auxiliary link 29 is pivotally connected at one end to link 28 and to auxiliary blade guard 26 at the other end. Preferably auxiliary link 29 is made of metal. It is preferable that auxiliary link 29 be pivotally connected to auxiliary blade guard 25 at a pivot junction 29P. Pivot junction 26P is preferably disposed between the point in auxiliary link 29 connected to link 28 and pivot junction 29P. Furthermore, pivot junction 26P is preferably disposed underneath a line drawn between the point in auxiliary link 29 connected to link 28 and pivot junction 29P.

Persons skilled in the art will recognize that it is also preferable that pivot junction 26P be disposed between pivot junctions 25P and 29P. Furthermore, pivot junction 26P is preferably disposed underneath a line drawn between the pivot junctions 25P and 29P.

Similarly, pivot junction 28P is preferably disposed between the point in auxiliary link 29 connected to link 28 and pivot junction 29P. Furthermore, pivot junction 28P is preferably disposed underneath a line drawn between the point in auxiliary link 29 connected to link 28 and pivot junction 29P.

With such arrangement, auxiliary blade guard 26 will move as lower blade guard 25 is rotating to expose the blade 23.

Preferably lower blade guard 25 moves over upper blade guard 27 and underneath auxiliary blade guard 26 when rotating.

Having such blade guard assembly covers more periphery of the blade 23 when the saw assembly 20 is in the upper position, while exposing more periphery of blade 23 (thus increasing cutting capacity) when the saw assembly 20 is in the lower position.

A handle 35 may be rotatably attached to link 28. A pull link 36 may be pivotally attached to handle 35 at one end and to auxiliary link 29 at the other end. With such arrangement, the user can rotate handle 35 to lift auxiliary blade guard 26 and/or lower blade guard 25.

This is especially useful when saw 100 is being used in table saw mode, as lower blade guard 25 and/or auxiliary blade guard 26 may be contacting the underside of table 11. Lower blade guard 25 and/or auxiliary blade guard 26 may prevent saw assembly 20 from beveling. The user can reach underneath table 11, pull handle 35, lifting auxiliary blade guard 26 and/or lower blade guard 25, allowing the saw assembly 20 to bevel.

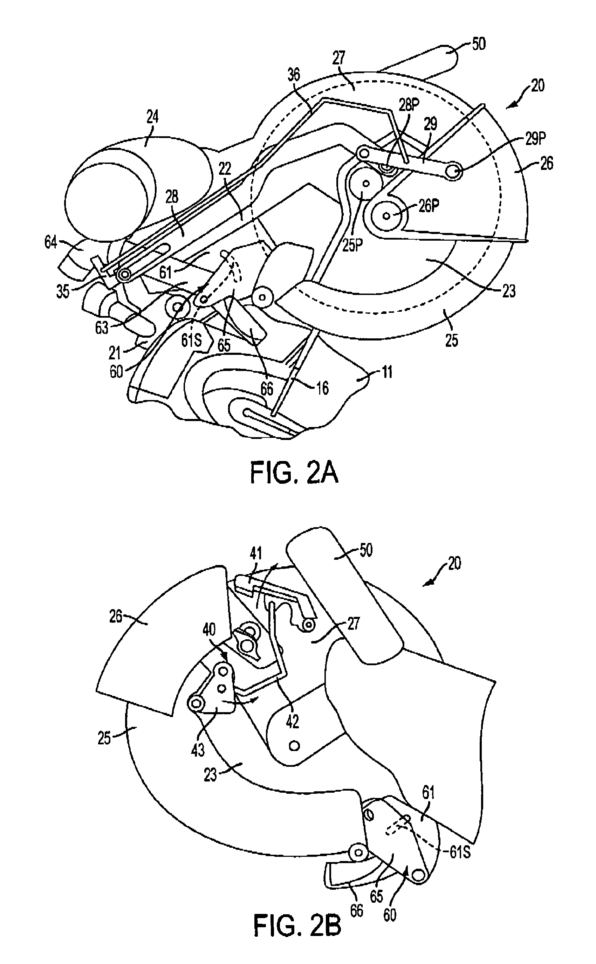

Referring to FIG. 2B, an uplock assembly 40 may be provided on upper blade guard 27 to prevent saw assembly 20 from pivoting downwardly towards table 11 when saw 100 is being used in miter saw mode. Uplock assembly 40 may include a lever 41 disposed near handle 50 and pivotably connected to upper blade guard 27, a guard lock 43 pivotably attached to upper blade guard 27 and rotatable between a first position engaging lower blade guard 25 and a second position not engaging lower blade guard 25, and a link 42 connected to lever 41 at one end and to guard lock 43 at the other end.

With such arrangement, the user would need to rotate lever 41 towards handle 50, causing guard lock 43 to rotate towards the second position, i.e., away from lower blade guard 25, allowing lower blade guard 43 to rotate and thus allowing saw assembly 20 to rotate downwardly. If the user does not rotate lever 41 as described above, guard lock 43 will engage lower blade guard 25, not allowing lower blade guard 25 to rotate and not allowing saw assembly 20 to rotate downwardly.

Persons skilled in the art will recognize that guard lock 43 may be designed to engage auxiliary blade guard 26 instead of or in addition to lower blade guard 25, and yet achieve the same result, i.e., not allowing saw assembly 20 to rotate downwardly until guard lock 43 is moved to the second position.

Persons skilled in the art will also recognize that a spring (not shown) should be provided to bias guard lock 43 towards the first position. Similarly, a spring (not shown) can be provided to lever 41 to bias it away from handle 50.

Because lower blade guard 25 typically does not contact arm 22, a rear guard is typically provided between arm 22 and lower blade guard 25 to cover the periphery of blade 23 therebetween. Dust duct assembly 60 is preferably provided on arm 22 to replace the typical rear guard.

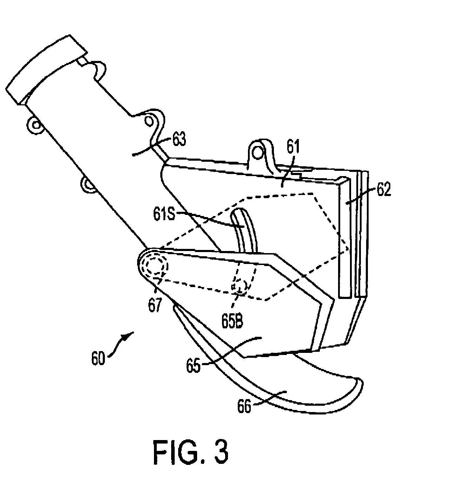

Referring to FIGS. 1-3, dust duct assembly 60 may have two walls 61 substantially parallel to blade 23. These walls 61 are connected to a dust duct 63. Persons skilled in the art will recognize that walls 61 preferably define a chamber therebetween that is connected to a dust exhaust channel within dust duct 63. Preferably part of the periphery of blade 23 extends into such chamber.

Each wall 61 may have a secondary wall 62 extending towards blade 23. Secondary walls 62 may act as blade calipers, limiting the sideways motion of blade 23. Alternatively, secondary walls 62 may contact the body of blade 23 before the blade's teeth contact upper blade guard 27, lower blade guard 25 and/or auxialiary blade guard 26. Persons skilled in the art will recognize secondary walls will not necessarily lower the amount of dust received by the chamber (and/or by dust duct 63) as the blade periphery is preferably disposed between the dust duct 63 and the secondary walls 62.

Dust duct 63 may extend past and/or through arm 22, and may be connected to a hose connected to a vacuum source, or to an elbow 64 for redirecting the flow of dust moving through dust duct 63. Preferably dust duct 63 extends past, rather than through, arm 22. In this manner dust duct 63 does not interfere with the spring (not shown) biasing arm 22 (and saw assembly 20) to the upper position.

It is preferable to provide walls 65 pivotably attached to dust duct 63. Alternatively walls 65 may be pivotably attached to walls 61. Preferably a wall 65 is disposed adjacent to a wall 61 and/or on each side of dust duct 63. Both walls 65 may be connected via a boss 65B. Boss 65B may travel along an arcuate slot 61 S disposed on both walls 61.

With such arrangement, movable walls 65 can pivot from a lower position to an upper position. Preferably, at least one spring 67 biases walls 65 towards the lower position. Walls 65 can pivot upwardly when lower blade guard 25 is in the original position contacting walls 65 (see FIG. 2A). Walls 65 can also pivot upwardly when one wall 65 contacts a fence 16 during a beveling operation.

A resilient flap 66 may be connected to dust duct 63. Preferably flap 66 is disposed underneath walls 61 and 65 to provide a bottom wall to the chamber defined by walls 61.

Persons skilled in the art will recognize that dust duct 63 and/or walls 61 may be attached to arm 22.

Persons skilled in the art may recognize other additions or alternatives to the means disclosed herein. However, all these additions and/or alterations are considered to be equivalents of the present invention.

## Claims

1. A power tool (100) comprising:
a base assembly (10);
a table (11) supported by the base assembly;
a saw assembly (20) pivotally attached to the table via a trunnion (21), the saw assembly including a motor (24), a blade (23) driven by the motor, an upper blade guard (27) covering an upper part of the blade, a lower blade guard (25) pivotally attached to the upper blade guard for covering a lower part of the blade, an auxiliary blade guard (26) pivotally attached to the lower blade guard, a first link (28) attached at one end to the trunnion and at the other end to the lower blade guard, **characterised by** an auxiliary link (29) attached at one end to the first link and at the other end to the auxiliary blade guard;
an uplock assembly (40) comprising a guard lock (43) movable between a first position contacting the lower blade guard and a second position not contacting the lower blade guard;
a handle (35) pivotably attached to the first link, and
a second link (36) attached to the handle at one end and to the auxiliary link at the other end, wherein auxiliary blade guard and/or lower blade guard are lifted when rotating the handle.

2. The power tool of Claim 1, wherein the uplock assembly further comprises a lever (41) attached to the upper blade guard and connected to the guard lock.

3. The power tool of Claim 2, wherein the saw assembly further comprises a handle (50), the lever being pivotally attached to the upper blade guard adjacent to the handle.

4. The power tool of Claim 2, wherein the lever is connected to the guard lock via a second link (42).

5. The power tool of Claim 1, wherein the guard lock is pivotably attached to the upper blade guard.

6. The power tool of Claim 1, wherein the table is pivotably supported by the base assembly.

7. The power tool of Claim 6, wherein the table pivots about a horizontal axis.

## Patentansprüche

1. Angetriebenes Werkzeug (100) umfassend:
eine Basisanordnung (10),
einen von der Basisanordnung gehaltenen Tisch (11),
eine Sägeanordnung (20), die über einen Schwenkzapfen (21) schwenkbar an dem Tisch angebracht ist, wobei die Sägeanordnung einen Motor (24), ein von dem Motor angetriebenes Sägeblatt (23), eine obere Sägeblattschutzhaube (27), die einen oberen Teil des Sägeblatts abdeckt, eine untere Sägeblattschutzhaube (25), die schwenkbar an der oberen Sägeblattschutzhaube zum Abdecken eines unteren Teils des Sägeblatts angebracht ist, eine Hilfssägeblattschutzhaube (26), die schwenkbar an der unteren Sägeblattschutzhaube angebracht ist, ein erstes Verbindungselement (28), das mit einem Ende an dem Schwenkzapfen und mit dem anderen Ende an der unteren Sägeblattschutzhaube angebracht ist, umfasst, **gekennzeichnet durch** ein Hilfsverbindungselement (29), das mit einem Ende an dem ersten Verbindungselement und mit dem anderen Ende an der Hilfssägeblattschutzhaube angebracht ist,
eine Sicherungsanordnung (40), die ein Schutzhaubenverriegelungselement (43) umfasst, das zwischen einer ersten Stellung, in der es mit der unteren Sägeblattschutzhaube in Kontakt ist, und einer zweiten Stellung, in der es nicht mit der unteren Sägeblattschutzhaube in Kontakt ist, beweglich ist,
einen Griff (35), der schwenkbar an dem ersten Verbindungselement angebracht ist, und
ein zweites Verbindungselement (36), das mit einem Ende an dem Griff und mit dem anderen Ende an dem Hilfsverbindungselement angebracht ist, wobei die Hilfssägeblattschutzhaube und/oder die untere Sägeblattschutzhaube angehoben werden, wenn der Griff gedreht wird.

2. Angetriebenes Werkzeug nach Anspruch 1, wobei die Sicherungsanordnung ferner einen Hebel (41) umfasst, der an der oberen Sägeblattschutzhaube angebracht und mit dem Schutzhaubenverriegelungselement verbunden ist.

3. Angetriebenes Werkzeug nach Anspruch 2, wobei die Sägeanordnung ferner einen Griff (50) aufweist, wobei der Hebel schwenkbar an der oberen Sägeblattschutzhaube benachbart zu dem Griff angeordnet ist.

4. Angetriebenes Werkzeug nach Anspruch 2, wobei der Hebel mit dem Schutzhaubenverriegelungselement über ein zweites Verbindungselement (42) verbunden ist.

5. Angetriebenes Werkzeug nach Anspruch 1, wobei das Schutzhaubenverriegelungselement schwenkbar an der oberen Sägeblattschutzhaube angebracht ist.

6. Angetriebenes Werkzeug nach Anspruch 1, wobei der Tisch schwenkbar von der Basisanordnung gehalten ist.

7. Angetriebenes Werkzeug nach Anspruch 6, wobei der Tisch um eine horizontale Achse schwenkt.

## Revendications

1. Outil motorisé (100) comprenant :
■ un ensemble de base (10) ;
■ une table (11) supportée par l'ensemble de base ;
■ un ensemble de scie (20) fixé de manière pivotante à la table via un tourillon (21), l'ensemble de scie comprenant un moteur (24), une lame (23) entraînée par le moteur, une protection de lame supérieure (27) recouvrant une partie supérieure de la lame, une protection de lame inférieure (25) fixée de manière pivotante à la protection de lame supérieure pour recouvrir une partie inférieure de la lame, une protection de lame intermédiaire (26) fixée de manière pivotante à la protection de lame inférieure, une première liaison (28) fixée au niveau d'une extrémité au tourillon et au niveau de l'autre extrémité à la protection de lame inférieure, **caractérisé par** une liaison auxiliaire (29) fixée au niveau d'une extrémité à la première liaison et au niveau de l'autre extrémité à la protection de lame auxiliaire ;
■ un ensemble de verrouillage (40) comprenant un verrou de protection (43) mobile entre une première position en contact avec la protection de lame inférieure et une seconde position qui n'est pas en contact avec la protection de lame inférieure ;
■ une poignée (35) fixée de manière pivotante à la première liaison, et
■ une seconde liaison (36) fixée à la poignée au niveau d'une extrémité et à la liaison auxiliaire au niveau de l'autre extrémité, dans lequel la protection de lame auxiliaire et/ou la protection de lame inférieure sont soulevées lors de la rotation de la poignée.

2. Outil motorisé selon la revendication 1, dans lequel l'ensemble de verrouillage comprend en outre un levier (41) fixé à la protection de lame supérieure et raccordé au verrou de la protection.

3. Outil motorisé selon la revendication 2, dans lequel l'ensemble de scie comprend en outre une poignée (50), le levier étant fixé de manière pivotante à la protection de lame supérieure adjacente à la poignée.

4. Outil motorisé selon la revendication 2, dans lequel le levier est raccordé au verrou de la protection via une seconde liaison (42).

5. Outil motorisé selon la revendication 1, dans lequel le verrou de la protection est fixé de manière pivotante à la protection de lame supérieure.

6. Outil motorisé selon la revendication 1, dans lequel la table est supportée de manière pivotante par l'ensemble de base.

7. Outil motorisé selon la revendication 6, dans lequel la table pivote autour d'un axe horizontal.
